# EUROPEAN PATENT APPLICATION

(11) **EP 3 493 366 A1**
(43) Date of publication of application: **05.06.2019**
(21) Application number: 17834610.2
(22) Date of filing: 24.05.2017
(51) Int. Cl.: H02J 50/80, H02J 50/90, H02J 7/02

(54) **LOCATION CHECKING METHOD AND APPARATUS FOR WIRELESS POWER RECEIVER**

(30) Priority: 28.07.2016 KR 20160095903
(71) Applicant: LG Innotek Co., Ltd., Seoul 04637 (KR)
(72) Inventor: JUNG, Woo Kil, Seoul 04637 (KR)
(74) Representative: DREISS Patentanwälte PartG mbB
(86) International application number: PCT/KR2017/005366
(87) International publication number: WO 2018/021665

(57) **Abstract**

The present invention relates to a location checking method and apparatus for a wireless power receiver. A method for controlling a wireless power transmitter according to an embodiment of the present invention may comprise the steps of: transmitting power to a wireless power receiver identified using ping signals that are transmitted during a first time; halting power transmission to the identified wireless power receiver during a pre-determined time if a power transmission halt condition is satisfied; after the pre-determined time has passed, transmitting ping signals to the wireless power receiver during a second time that is shorter than the first time; receiving acknowledgement signals with respect to the ping signals from the wireless power receiver during the second time; and determining whether the wireless power receiver is located in a charging region using the acknowledgement signals.

## Description

### [Technical Field]

Embodiments relate to wireless power transmission technology and, more particularly, to a method of confirming the location of a wireless power receiver, and a wireless power transmitter for performing the same.

### [Background Art]

A portable terminal such as a mobile phone or a laptop includes a battery for storing power and a circuit for charging and discharging the battery. In order to charge the battery of such a terminal, power needs to be received from an external charger.

In general, as an example of a method of electrically connecting a battery with a charging device for charging the battery, there is a terminal supply method of receiving and converting commercial power into a voltage or current corresponding to the battery and supplying electric energy to the battery through a terminal of the battery. Such a terminal supply method uses physical cables or wires. Accordingly, when many apparatuses using the terminal supply methods are handled, many cables occupy a considerable work space and have difficulty in arrangement thereof, causing a bad appearance. In addition, the terminal supply method may cause problems such as instantaneous discharge due to different potential differences between terminals, fire and damage caused due to foreign objects, natural discharge and battery lifespan and performance degradation.

Recently, in order to solve such problems, a charging system (hereinafter referred to as a wireless charging system) using a method of wirelessly transmitting power and methods of controlling the same have been proposed. In the past, since wireless charging systems were not installed in some portable terminals and consumers had to purchase separate wireless charging receiver accessories, the demand for the wireless charging system was low. However, in the future, the number of users who use the wireless charging system will be rapidly increased and a wireless charging function will be installed by terminal manufacturers.

In general, the wireless charging system includes a wireless power transmitter for supplying electric energy using a wireless power transmission method and a wireless power receiver for receiving electric energy from the wireless power transmitter and charging a battery.

Such a wireless charging system may transfer power using at least one wireless power transmission method (e.g., an electromagnetic induction method, an electromagnetic resonance method, an RF wireless power transmission method, etc.) .

For example, as a wireless power transmission method, various wireless power transmission standards based on an electromagnetic induction method of performing charging using the electromagnetic induction principle in which a magnetic field is generated in a power transmitter coil and electricity is induced in a receiver coil by the magnetic field may be used. Here, the wireless power transmission standard of the electromagnetic induction method may include wireless charging technology of the electromagnetic induction method defined in the Wireless Power Consortium (WPC) and/or Power Matters Alliance (PMA).

In another example, as a wireless power transmission method, an electromagnetic resonance method of tuning a magnetic field generated by a transmission coil of a wireless power transmitter to a specific resonant frequency and transmitting power to a wireless power receiver located a short distance away may be used. Here, the electromagnetic resonance method may include resonance type wireless charging technology defined in the Alliance for Wireless Power (A4WP) standard organization as a wireless charging technology standard organization. In another example, as a wireless power transmission method, an RF wireless power transmission method of including low-power energy in an RF signal and transferring power to a wireless power receiver may be used.

Meanwhile, a wireless power transmitter determines whether a wireless power receiver is located in a charging area and generates a power signal when the wireless power receiver is located in the charging area.

A wireless power transmitter determines whether the location of a wireless power receiver has been changed when a predetermined time has elapsed even if power transfer to the wireless power receiver is stopped.

There is a need for a detailed method of determining whether a wireless power receiver has been changed in a state in which power transfer of the wireless power transmitter ends.

### [Disclosure]

### [Technical Problem]

Embodiments provide a method and apparatus for confirming the location of a wireless power receiver.

Embodiments provide a method of controlling a wireless power transmitter capable of determining location change of a wireless power receiver.

Embodiments provide a method of controlling a wireless power transmitter capable of rapidly determining location change of a wireless power receiver using only some information of a response signal to a ping signal transmitted in a state in which power transfer to a wireless power receiver ends.

The technical problems solved by the embodiments are not limited to the above technical problems and other technical problems which are not described herein will become apparent to those skilled in the art from the following description.

### [Technical Solution]

Embodiments provide a method of controlling a wireless power transmitter including transferring power to a wireless power receiver identified by a ping signal transmitted during a first time, ending power transfer to the identified wireless power receiver during a predetermined time when a power transfer end condition is satisfied, transmitting a ping signal to the wireless power receiver during a second time shorter than the first time after the predetermined time has elapsed, receiving a response signal to the ping signal from the wireless power receiver during the second time, and determining whether the wireless power receiver is located in a charging area using the response signal.

In some embodiments, the determining of whether the wireless power receiver is located in the charging area using the response signal may include determining whether the wireless power receiver is located in the charging area using some information of the response signal.

In some embodiments, the power transfer end condition may be satisfied when a status signal is not received from the wireless power receiver within a third time or when a status error signal is received from the wireless power receiver.

In some embodiments, the determining of whether the wireless power receiver is located in the charging area using some information of the response signal may include determining whether the wireless power receiver is located in the charging area using information received during a fourth time from a point in time when the response signal has been received.

In some embodiments, the determining of whether the wireless power receiver is located in the charging area using some information of the response signal may include determining whether the wireless power receiver is located in the charging area using information contained in a predetermined number of consecutive bits from a start bit of the response signal.

In some embodiments, the determining of whether the wireless power receiver is located in the charging area using some information of the response signal may include determining that the wireless power receiver is located in the charging area when the some information is equal to predetermined information.

In some embodiments, the status error signal may be received from the wireless power receiver while transmitting a power signal to the wireless power receiver.

In some embodiments, the status error signal may include at least one of Charge Complete, Internal Fault, Over Temperature, Over Voltage, Over Current, Battery Failure, Reconfigure and No Response.

In some embodiments, the method may further include determining that the wireless power receiver is not located in the charging area and ending power transfer, when the response signal is not received.

The method may further include ending power transfer when the wireless power receiver is located in the charging area.

According to another embodiment, a computer-readable recording medium having recorded thereon a program for executing any one of the above-described methods may be provided.

According to another embodiment, a power transferer configured to transfer power to a wireless power receiver identified by a ping signal transmitted during a first time, a controller configured to end power transfer to the identified wireless power receiver during a predetermined time when a power transfer end condition is satisfied, and a transmission coil configured to transmit a ping signal to the wireless power receiver during a second time shorter than the first time after the predetermined time has elapsed and to receive a response signal to the ping signal from the wireless power receiver during the second time, wherein the controller determines whether the wireless power receiver is located in a charging area using the response signal.

In some embodiments, the controller may determine whether the wireless power receiver is located in the charging area using some information of the response signal.

In some embodiments, the power transfer end condition may be satisfied when a status signal is not received from the wireless power receiver within a third time or when a status error signal is received from the wireless power receiver.

In some embodiments, the controller may determine whether the wireless power receiver is located in the charging area using information received during a fourth time from a point in time when the response signal has been received.

In some embodiments, the controller may determine whether the wireless power receiver is located in the charging area using information contained in a predetermined number of consecutive bits from a start bit of the response signal.

In some embodiments, the controller may determine that the wireless power receiver is located in the charging area when the some information is equal to predetermined information.

In some embodiments, the status error signal may be received from the wireless power receiver while transmitting a power signal to the wireless power receiver.

In some embodiments, the status error signal may include at least one of Charge Complete, Internal Fault, Over Temperature, Over Voltage, Over Current, Battery Failure, Reconfigure and No Response.

In some embodiments, the controller may determine that the wireless power receiver is not located in the charging area and ending power transfer, when the response signal is not received.

In some embodiments, the controller may end power transfer when the wireless power receiver is located in the charging area.

The aspects of the disclosure are only a part of the preferred embodiments of the disclosure, and various embodiments based on technical features of the disclosure may be devised and understood by the person with ordinary skill in the art based on the detailed description of the disclosure.

### [Advantageous Effects]

The effects of the method and apparatus for confirming the location of the wireless power receiver according to embodiments are as follows.

First, it is possible to more rapidly determine whether the location of a wireless power receiver has been changed using a response signal of a wireless power receiver corresponding to a ping signal transmitted for a shorter time than a ping signal for identifying the wireless power receiver.

Second, it is possible to reduce power consumption by decreasing a ping signal transmission time of a wireless power transmitter.

Third, it is possible to reduce the amount of transmitted power due to a ping signal even when the location of a wireless power receiver is not changed and to reduce heating of the wireless power receiver.

Fourth, it is possible to reduce the amount of power of a ping signal received by a wireless power receiver and to reduce the amount of heat generated in the wireless power receiver.

The effects of the disclosure are not limited to the above-described effects and other effects which are not described herein may be derived by those skilled in the art from the following description of the embodiments of the disclosure. That is, effects which are not intended by the disclosure may be derived by those skilled in the art from the embodiments of the disclosure.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a block diagram illustrating a wireless charging system according to an embodiment;
FIG. 2 is a block diagram illustrating a wireless charging system according to another embodiment;
FIG. 3 is a view illustrating a sensing signal transmission procedure in a wireless charging system according to an embodiment;
FIG. 4 is a state transition diagram explaining a wireless power transmission procedure defined in the WPC standard;
FIG. 5 is a state transition diagram explaining a wireless power transmission procedure defined in the WPC (Qi) standard;
FIG. 6 is a block diagram illustrating the structure of a wireless power transmitter according to an embodiment;
FIG. 7 is a block diagram illustrating the structure of a wireless power receiver interworking with a wireless power transmitter according to an embodiment;
FIG. 8 is a diagram illustrating a method of modulating and demodulating a wireless power signal according to an embodiment;
FIG. 9 is a diagram illustrating a packet format according to an embodiment;
FIG. 10 is a diagram illustrating types of packets transmittable by a wireless power reception apparatus according to the embodiment in a ping phase;
FIG. 11 is a diagram illustrating a procedure of transmitting a first packet in a wireless power reception apparatus according to an embodiment;
FIG. 12 is a diagram illustrating the message format of an identification packet according to an embodiment;
FIG. 13 is a diagram illustrating the message format of a configuration packet and a power control hold-off time packet according to the embodiment;
FIG. 14 is a diagram illustrating the types of packets transmittable by a wireless power reception apparatus according to an embodiment in a power transfer phase and the message formats thereof;
FIG. 15 is a diagram illustrating a response signal corresponding to a ping signal transmitted from a wireless power transmitter according to an embodiment;
FIG. 16 is a flowchart illustrating a method of confirming location change of a wireless power receiver according to an embodiment;
FIG. 17 is a diagram illustrating reception timings of response signals corresponding to ping signals having different transmission times according to an embodiment; and
FIG. 18 is a diagram illustrating reception timings of response signals corresponding to ping signals having different transmission times according to another embodiment.

### [Best Mode]

A method of controlling a wireless power transmitter according to an embodiment includes transferring power to a wireless power receiver identified by a ping signal transmitted during a first time, ending power transfer to the identified wireless power receiver during a predetermined time when a power transfer end condition is satisfied, transmitting a ping signal to the wireless power receiver during a second time shorter than the first time after the predetermined time has elapsed, receiving a response signal to the ping signal from the wireless power receiver during the second time, and determining whether the wireless power receiver is located in a charging area using the response signal.

### [Mode for Invention]

Hereinafter, apparatuses and various methods according to embodiments will be described in detail with reference to the accompanying drawings. In general, a suffix such as "module" or "unit" may be used to refer to elements or components. Use of such a suffix herein is merely intended to facilitate description of the specification, and the suffix itself is not intended to have any special meaning or function.

Although all elements constituting the embodiments of the present invention are described to be integrated into a single one or to be operated as a single one, the present invention is not necessarily limited to such embodiments. According to embodiments, all of the elements may be selectively integrated into one or more and be operated as one or more within the object and the scope of the present invention. Each of the elements may be implemented as independent hardware. Alternatively, some or all of the elements may be selectively combined into a computer program having a program module performing some or all functions combined in one or more pieces of hardware. A plurality of codes and code segments constituting the computer program may be easily reasoned by those skilled in the art to which the present invention pertains. The computer program may be stored in a computer readable media such that the computer program is read and executed by a computer to implement embodiments of the present invention. Computer program storage media may include magnetic recording media, optical recording media, and carrier wave media.

In the following description of the embodiments, it will be understood that, when each element is referred to as being formed "on" or "under" and "ahead of" or "behind" the other element, it can be directly "on" or "under" and "ahead of" or "behind" the other element or be indirectly formed with one or more intervening elements therebetween.

The term "comprises", "includes", or "has" described herein should be interpreted not to exclude other elements but to further include such other elements since the corresponding elements may be inherent unless mentioned otherwise. All terms including technical or scientific terms have the same meanings as generally understood by a person having ordinary skill in the art to which the present invention pertains unless mentioned otherwise. Generally used terms, such as terms defined in a dictionary, should be interpreted to coincide with meanings of the related art from the context. Unless obviously defined in the present invention, such terms are not interpreted as ideal or excessively formal meanings.

It will be understood that, although the terms first, second, A, B, (a), (b), etc. may be used herein to describe various elements of the present invention, these terms are only used to distinguish one element from another element and essential, order, or sequence of corresponding elements are not limited by these terms. It will be understood that when one element is referred to as being "connected to", "coupled to", or "accessed to" another element, one element may be "connected to", "coupled to", or "accessed to" another element via a further element although one element may be directly connected to or directly accessed to another element.

In describing the present invention, a detailed description of known functions and configurations will be omitted when it may obscure the subject matter of the present disclosure.

In the description of embodiments, an apparatus for transmitting wireless power in a wireless power charging system may be used interchangeably with a wireless power transmitter, a wireless power transfer apparatus, a wireless electric power transfer apparatus, a wireless electric power transmitter, a transmission end, a transmitter, a transmission apparatus, a transmission side, a wireless power transfer apparatus, a wireless power tranferer, a wireless charging apparatus, etc., for convenience of description. An apparatus for receiving wireless power from a wireless power transfer apparatus may be used interchangeably with a wireless electric power reception apparatus, a wireless electric power receiver, a wireless power reception apparatus, a wireless power receiver, a reception terminal, a reception side, a reception apparatus, a receiver terminal, etc.

The wireless charging apparatus according to embodiment may be configured in the form of a pad, a cradle, an access point (AP), a small base station, a stand, a ceiling embedded structure or a wall-mounted structure. One transmitter may transfer power to a plurality of wireless power reception apparatuses.

For example, a wireless power transmitter may be generally used on a desk or a table or may be used in a vehicle. A wireless power transmitter installed in a vehicle may be provided in the form of a cradle capable of being conveniently and stably fixed and installed.

The terminal according to the embodiment may be used in a small electronic apparatus such as a mobile phone, a smartphone, a laptop, a digital broadcast terminal, a personal digital assistant (PDA), a portable multimedia player (PMP), a navigation system, an MP3 player, an electric toothbrush, an electronic tag, a lighting device, a remote controller, a fishing float, etc. without being limited thereto, and the terms terminal and device may be used interchangeably. A wireless power receiver according to another embodiment may be installed in a vehicle, an unmanned aerial vehicle, an air drone, etc.

In addition, a wireless power receiver according to an embodiment may include at least one wireless power transmission methods and may simultaneously receive wireless power from two or more wireless power transmitters. Here, the wireless power transmission methods may include at least one of an electromagnetic induction method, an electromagnetic resonance method and an RF wireless power transmission method. In particular, the wireless power reception means supporting the electromagnetic induction method may include wireless charging technology of the electromagnetic induction method defined in the Wireless Power Consortium (WPC) and Power Matters Alliance (PMA) which are the wireless charging technology organizations.

In general, a wireless power transmitter and a wireless power receiver configuring a wireless power system may exchange control signals or information through in-band communication or Bluetooth low energy (BLE) communication. Here, in-band communication or BLE communication may be performed by a pulse width modulation method, a frequency modulation method, a phase modulation method, an amplitude modulation method, an amplitude and phase modulation method, etc. For example, the wireless power receiver may transmit various control signals and information to the wireless power transmitter, by switching on/off current induced through a reception coil in a predetermined pattern to generate a feedback signal. The information transmitted by the wireless power receiver may include a variety of status information including received power strength information. At this time, the wireless power transmitter may calculate charging efficiency or power transmission efficiency based on the received power strength information.

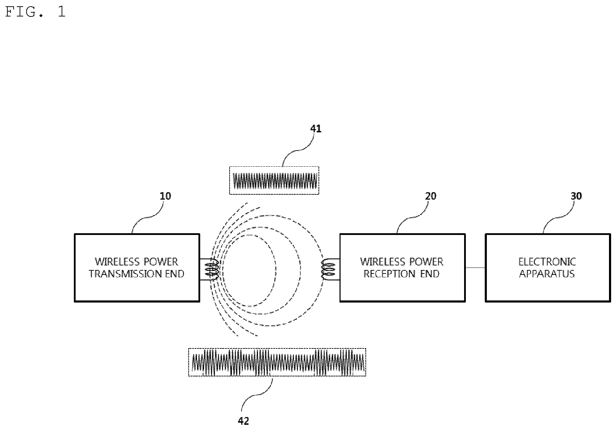

FIG. 1 is a block diagram illustrating a wireless charging system according to an embodiment.

Referring to FIG. 1, the wireless charging system roughly includes a wireless power transfer end 10 for wirelessly transmitting power, a wireless power reception end 20 for receiving the transmitted power and an electronic apparatus 20 for receiving the received power.

In an embodiment, the wireless power transfer end 10 and the wireless power reception end 20 may perform in-band communication in which information is exchanged using the same frequency band as the operating frequency used for wireless power transfer. In another example, the wireless power transfer end 10 and the wireless power reception end 20 may perform out-of-band communication in which information is exchanged using the frequency band different from the operating frequency used for wireless power transfer.

For example, the information exchanged between the wireless power transfer end 10 and the wireless power reception end 20 may include status information of each other and control information. Here, the status information and the control information exchanged between the transmission end and the reception end will become more apparent through the following description of the embodiments.

In-band communication and out-of-communication may provide bidirectional communication, but the embodiments are not limited thereto. In another embodiment, in-band communication and out-of-communication may provide a unidirectional communication or half duplex communication.

For example, unidirectional communication may, but is not limited to, mean transmission of information from the wireless power reception end 20 to the wireless power transfer end 10 or transmission from the wireless power transfer end 10 to the wireless power reception end 20.

The half duplex communication method is characterized in that bidirectional communication between the wireless power reception end 20 and the wireless power transfer end 10 is enabled but information can be transmitted only by one device at a certain point in time.

The wireless power reception end 20 according to the embodiment may acquire a variety of status information of the electronic apparatus 30. For example, the status information of the electronic apparatus 30 may include, but is not limited to, current power usage information, current power usage information, information for identifying an executed application, CPU usage information, battery charge status information, battery output voltage/current information, etc. and may include information capable of being acquired from the electronic apparatus 30 and being used for wireless power control.

In particular, the wireless power transfer end 10 according to the embodiment may transmit a predetermined packet indicating whether fast charging is supported to the wireless power reception end 20. The wireless power reception end 20 may inform the electronic apparatus 30 that the wireless power transfer end 10 supports the fast charging mode, upon determining that the wireless power transfer end 10 supports the fast charging mode. The electronic apparatus 30 may display information indicating that fast charging is possible through a predetermined display means, for example, a liquid crystal display.

In addition, the user of the electronic apparatus 30 may select a predetermined fast charging request button displayed on the liquid crystal display means and control the wireless power transmission end 10 to operate in the fast charging mode. In this case, when the user selects the fast charging request button, the electronic apparatus 30 may transmit a predetermined fast charging request signal to the wireless power reception end 20. The wireless power reception end 20 may generate and transmit a charging mode packet corresponding to the received fast charging request signal to the wireless power transmission end 10, thereby switching a normal low-power charging mode to the fast charging mode.

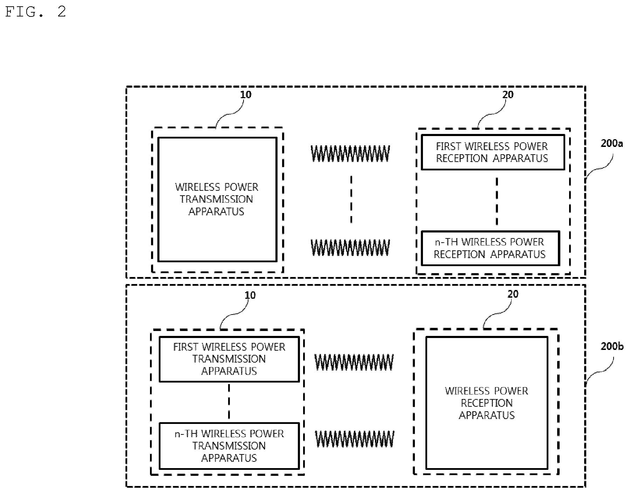

FIG. 2 is a block diagram illustrating a wireless charging system according to another embodiment.

For example, as denoted by reference numeral 200a, the wireless power reception end 20 may include a plurality of wireless power reception apparatuses and one wireless power transmission end 10 may be connected with a plurality of wireless power reception apparatuses to perform wireless charging. At this time, the wireless power transmission end 10 divides and transmits power to the plurality of wireless power reception apparatuses in a time-divisional manner, without being limited thereto. In another example, the wireless power transmission end 10 may divide and transmit power to the plurality of wireless power reception apparatuses using different frequency bands allocated to the wireless power reception apparatuses.

At this time, the number of wireless power reception apparatuses connectable to one wireless power transmission apparatus 10 may be adaptively determined based on at least one of the required power amount of each wireless power reception apparatus, a battery charging status, the power consumption of an electronic apparatus and the available power amount of the wireless power transmission apparatus.

In another example, as denoted by reference numeral 200b, the wireless power transmission end 10 may include a plurality of wireless power transmission apparatuses. In this case, the wireless power reception end 20 may be simultaneously connected to the plurality of wireless power transmission apparatuses to simultaneously receive power from the connected wireless power transmission apparatuses, thereby performing charging. At this time, the number of wireless power transmission apparatuses connected to the wireless power reception end 20 may be adaptively determined based on the required power amount of the wireless power reception end 20, the battery charging state, the power consumption of the electronic apparatus and the available power amount of the wireless power transmission apparatus.

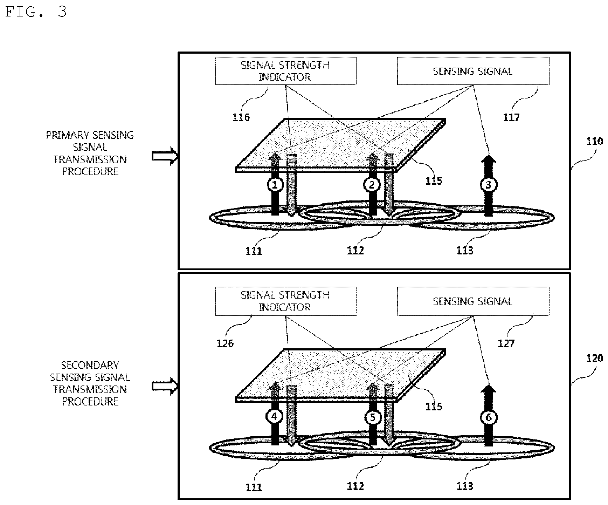

FIG. 3 is a view illustrating a sensing signal transmission procedure in a wireless charging system according to an embodiment.

For example, a wireless power transmitter may include three transmission coils 111, 112 and 113 mounted therein. The transmission coils may partially overlap each other, and the wireless power transmitter sequentially transmits predetermined sensing signals 117 and 127 for detecting presence of a wireless power receiver, for example, digital ping signals, through each transmission coil in a predefined order.

As shown in FIG. 3, the wireless power transmitter may sequentially transmit the sensing signal 117 through a primary sensing signal transmission procedure denoted by reference numeral 110 and identify the transmission coils 111 and 112, through which a signal strength indicator 116 (or a signal strength packet) is received from the wireless power receiver 115. Subsequently, the wireless power transmitter may perform control to sequentially transmit the sensing signal 127 through a secondary sensing signal transmission procedure denoted by reference numeral 120, to identify a transmission coil having good power transfer efficiency (or charging efficiency), that is, a good alignment state between the transmission coil and the reception coil, between the transmission coils 111 and 112, through which the signal strength indicator 126 is received, and to transmit power through the identified transmission coil, that is, to perform wireless charging.

As shown in FIG. 3, the wireless power transmitter performs two sensing signal transmission procedures in order to more accurately identify to which transmission coil the reception coil of the wireless power receiver is well aligned.

If the signal strength indicators 116 and 126 are received through the first transmission coil 111 and the second transmission coil 112 as denoted by reference numerals 110 and 120 of FIG. 3, the wireless power transmitter selects the best aligned transmission coil based on the signal strength indicator 126 received through the first transmission coil 111 and the second transmission coil 112, and performs wireless charging using the selected transmission coil.

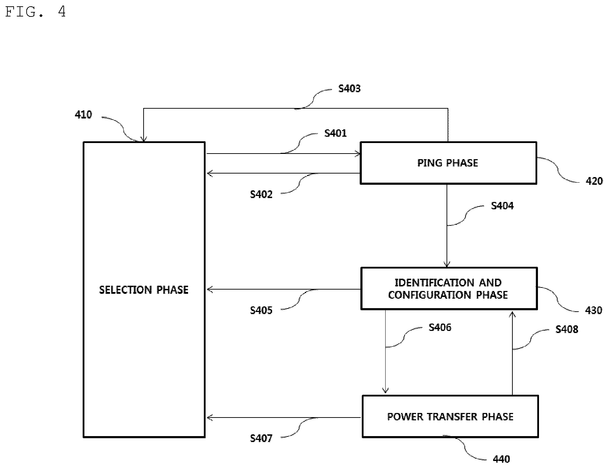

FIG. 4 is a state transition diagram explaining a wireless power transmission procedure defined in the WPC standard.

Referring to FIG. 4, power transfer from the transmitter to the receiver based on the WPC standard may be broadly divided into a selection phase 410, a ping phase 420, an identification and configuration phase 430, and a power transfer phase 440.

The selection phase 410 may transition when power transfer starts or when a specific error or a specific event is sensed while power transfer is maintained. The specific error and the specific event will become apparent from the following description. In addition, in the selection phase 410, the transmitter may monitor whether an object is present on a charging interface surface. Upon detecting that the object is placed on the charging interface surface, the transmitter may transition to the ping phase 420 (S401).

In the selection phase 410, the transmitter may transmit an analog ping signal having a very short pulse and may detect whether an object is present in an active area of the charging interface surface based on change in current of the transmission coil.

When the object is detected in the ping phase 420, the transmitter wakes up the receiver and transmits a digital ping for identifying whether the object is a receiver capable of being compatible with the WPC standard. When a response signal, for example, a signal strength indicator, is not received from the receiver in response to the digital ping in the ping phase 410, the transmitter may transition to the selection phase 410 again (S402). In addition, when a signal indicating that power transfer has ended, that is, a charging end signal, is received from the receiver in the ping phase 420, the transmitter may transition to the selection phase 410 (S403).

When the ping phase 420 has ended, the transmitter may identify the receiver and transition to the identification and configuration phase 430 for identifying the receiver and collecting the configuration and status information of the receiver (S404).

In the identification and configuration phase 430, when an unexpected packet is received, when an expected packet is not received during a predetermined time (timeout), when a packet transmission error occurs, or when power transfer contract is not established (no power transfer contract), the transmitter may transition to the selection phase 410 (S405).

If identification and configuration of the receiver has ended, the transmitter may transition to the power transfer phase 440 for transferring wireless power (S406).

In the power transfer phase 440, when an unexpected packet is received, when an expected packet is not received during a predetermined time (timeout), when power transfer contract violation occurs or when charging is terminated, or when charging has ended, the transmitter may transition to the selection phase 410 (S407).

In addition, in the power transfer phase 440, if a power transfer contract needs to be reconfigured according to transmitter status change, etc., the transmitter may transition to the identification and configuration phase 430 (S408).

The power transfer contract may be configured based on the transmitter and receiver status information and characteristic information. For example, the transmitter status information may include information on the maximum amount of transmittable power, information on the maximum number of receivable receivers, etc. and the receiver status information may include information on required power.

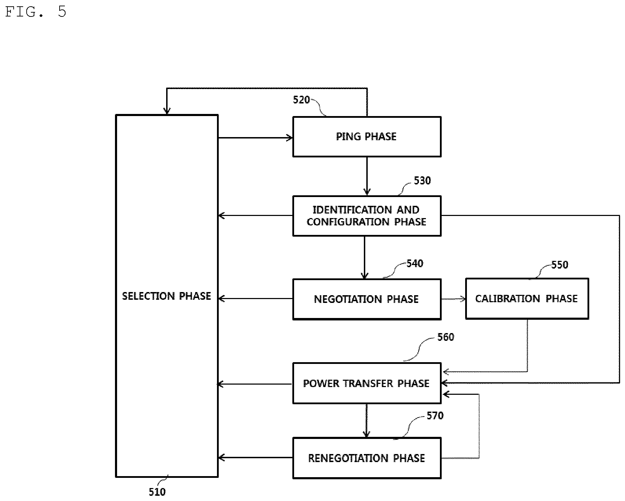

FIG. 5 is a state transition diagram explaining a wireless power transmission procedure defined in the WPC (Qi) standard.

Referring to FIG. 5a, power transfer from the transmitter to the receiver according to WPC (Qi) standard may be broadly divided into a selection phase 510, a ping phase 520, an identification and configuration phase 530, a negotiation phase 540, a calibration phase 550, a power transfer phase 560 and a renegotiation phase 570.

The selection phase 510 may transition when power transfer starts or when a specific error or a specific event is sensed while power transfer is maintained. The specific error and the specific event will become apparent from the following description. In addition, in the selection phase 510, the transmitter may monitor whether an object is present on an interface surface. Upon detecting that the object is present on the interface surface, the transmitter may transition to the ping step 520. In the selection phase 510, the transmitter may transmit an analog ping signal having a very short pulse and detect whether an object is present in an active area of the interface surface based on change in current of a transmission coil or a primary coil.

In the ping step 520, when the object is detected, the transmitter wakes up the receiver and transmits a digital ping for identifying whether the receiver is capable of being compatible with the WPC standard. In the ping step 520, when a response signal to the digital ping, for example, a signal strength packet, is not received from the receiver, the transmitter may transition to the selection phase 510 again. In addition, in the ping phase 520, when a signal indicating that power transfer has been terminated, that is, a charging termination packet, is received from the receiver, the transmitter may transition to the selection phase 510.

If the ping phase 520 is terminated, the transmitter may transition to the identification and configuration phase 530 for identifying the receiver and collecting the configuration and status information of the receiver.

In the identification and configuration phase 530, when an unexpected packet is received, when an expected packet is not received during a predetermined time (timeout), when a packet transmission error occurs, or when power transfer contract is not established (no power transfer contract), the transmitter may transition to the selection phase 510.

The transmitter may determine whether entry into the negotiation phase 540 is necessary based on the negotiation field value of the configuration packet received in the identification and configuration phase 530.

Upon determining that negotiation is necessary, the transmitter may transition to the negotiation phase 540 to perform a predetermined FOD procedure.

In contrast, upon determining that negotiation is not necessary, the transmitter may immediately transition to the power transfer phase 560.

In the negotiation phase 540, the transmitter may receive a foreign object detection (FOD) status packet including a reference quality factor value. At this time, the transmitter may determine a threshold value for FO detection based on the reference quality factor value.

The transmitter may detect whether an FO is present in the charging area using the threshold value for FO detection and a currently measured quality factor value and control power transfer according to the result of FO detection. For example, when the FO is detected, power transfer may end, without being limited thereto.

When the FO is detected, the transmitter may return to the selection phase 510. In contrast, when the FO is not detected, the transmitter may transition to the power transfer phase 560 through the calibration phase 550. Specifically, when the FO is not detected, the transmitter may measure power loss at the reception end and the transmission end, in order to determine the strength of the power received by the reception end and to determine the strength of the power transmitted by the transmission end in the calibration phase 550. That is, the transmitter may predict power loss based on a difference between the transmission power of the transmission end and the reception power of the reception end in the calibration phase 550. The transmitter according to one embodiment may calibrate the threshold value for FO detection using the predicted power loss.

In the power transfer phase 560, when an unexpected packet is received, when an expected packet is not received during a predetermined time (timeout), when power transfer contract violation occurs or when charging is terminated, the transmitter may transition to the selection phase 510.

In addition, in the power transfer phase 560, if a power transfer contract needs to be reconfigured according to transmitter status change, etc., the transmitter may transition to the renegotiation phase 570. At this time, when renegotiation is normally terminated, the transmitter may return to the power transfer phase 560.

The power transfer contract may be configured based on the transmitter and receiver status information and characteristic information. For example, the transmitter status information may include information on the maximum amount of transmittable power, information on the maximum number of receivable receivers, etc. and the receiver status information may include information on required power.

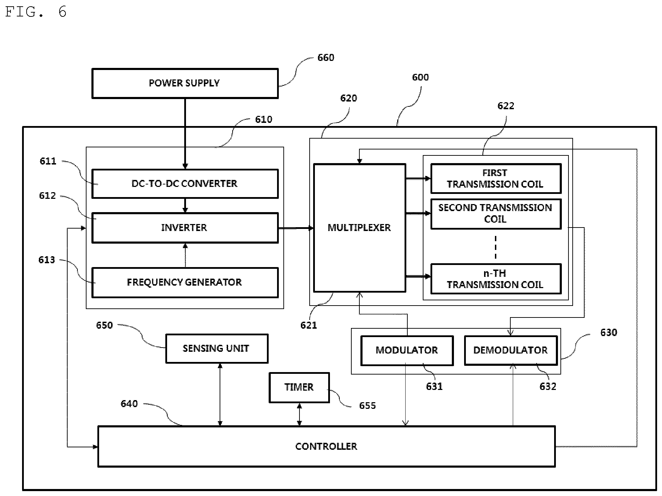

FIG. 6 is a block diagram illustrating the structure of a wireless power transmitter according to an embodiment.

Referring to FIG. 6, the wireless power transmitter 600 may roughly include a power converter 610, a power transfer unit 620, a communication unit 630, a controller 640, and a sensing unit 650. It should be noted that the components of the wireless power transmitter 600 are not mandatory and more or fewer components may be included.

As shown in FIG. 6, the power converter 610 may perform a function for converting DC power received from the power supply 660 into AC power having a predetermined strength.

The power converter 610 may include a DC-to-DC converter 611, an inverter 612 and a frequency generator 613. Here, the inverter 612 may include a half bridge inverter or a full bridge inverter. However, the embodiment is not limited thereto and the inverter may be a circuit for converting DC power into AC power having a specific operating frequency.

The DC-to-DC converter 611 may perform a function for converting the DC power received from the power supply 650 into DC power having a specific strength according to a control signal of the controller 640.

At this time, the sensing unit 650 may measure the voltage/current of the converted DC power and provide the voltage/current to the controller 640. In addition, the sensing unit 650 may measure the internal temperature of the wireless power transmitter 600 and provide the measured result to the controller 640, in order to determine whether overheating has occurred. For example, the controller 640 may adaptively block power supplied from the power supply 650 based on the voltage/current value measured by the sensing unit 650 or block supply of power to the amplifier 612. To this end, a predetermined power blocking circuit for blocking power supplied to the amplifier 612 or blocking power supplied from the power supply 650 may be further provided on one side of the power converter 610.

The inverter 612 may convert the DC-to-DC converted DC power into AC power based on a reference AC signal generated by a frequency generator 613. At this time, the frequency, that is, operating frequency, of the reference AC signal may be dynamically changed according to the control signal of the controller 640. The wireless power transmitter 600 according to the embodiment may adjust the operating frequency to adjust the strength of the transmitted power. For example, the controller 640 may receive the power reception status information and/or power control signal of the wireless power receiver through the communication unit 630, determine the operating frequency based on the received power reception status information and/or power control signal, and dynamically control the frequency generator 613 to generate the determined operating frequency. For example, the power reception status information may include the strength information of a rectifier output voltage, the strength information of current applied to a reception coil, etc., without being limited thereto. The power control signal may include a signal for requesting power increase, a signal for requesting power decrease, etc.

The power transfer unit 620 may include a multiplexer 621 and a transmission coil unit 622. Here, the transmission coil unit 622 may include first to n-th transmission coils. In addition, the power transfer unit 620 may further include a carrier generator (not shown) for generating a specific carrier frequency for power transfer. In this case, the carrier generator may generate a specific carrier frequency for mixing with the output AC power of the inverter 612 received through the multiplexer 621. It should be noted that the frequencies of the AC power transmitted to the transmission coils are different in the embodiment. In another embodiment, the resonant frequencies of the transmission coils may be differently set using a predetermined frequency controller including a function for differently adjusting LC resonant characteristics according to the transmission coils.

The multiplexer 621 may perform a switch function for transmitting the AC power to the transmission coil selected by the controller 640. The controller 640 may select a transmission coil to be used for power transfer to the wireless power receiver based on the received signal strength indicator of each transmission coil.

When a plurality of wireless power receivers is connected, the controller 640 according to the embodiment may transmit power through time-division multiplexing of the transmission coils. For example, when three wireless power receivers, that is, first to third wireless power receivers, are identified using three transmission coils, that is, first to third transmission coils, in the wireless power transmitter 600, the controller 640 may control the multiplexer 621 to transmit AC power at a specific time slot only through a specific transmission coil. At this time, the amount of power transmitted to the wireless power receiver may be controlled according to the length of the time slot allocated to each transmission coil. However, this is only an embodiment and the strength of the output DC power of the DC-to-DC converter 611 may be controlled during a time slot allocated to each transmission coil to control the transmission power of each wireless power receiver.

The controller 640 may control the multiplexer 621 to sequentially transmit sensing signals through the first to n-th transmission coils 622 during a primary sensing signal transmission procedure. At this time, the controller 640 may identify a time when the sensing signal will be transmitted using a timer 655, and control the multiplexer 621 to transmit the sensing signal through the transmission coil when a sensing signal transmission time arrives. For example, the timer 650 may transmit a specific event signal to the controller 640 at predetermined periods during the ping transmission phase, and the controller 640 may control the multiplexer 621 to transmit a digital ping through the transmission coil whenever the event signal is sensed.

In addition, the controller 640 may receive a predetermined transmission coil identifier for identifying through which transmission coil a signal strength indicator has been received from a demodulator 632 during the primary sensing signal transmission procedure, and the signal strength indicator received through the transmission coil. Subsequently, in a secondary sensing signal transmission procedure, the controller 640 may control the multiplexer 621 to transmit the sensing signal only through the transmission coil(s), through which the signal strength indicator has been received during the primary sensing signal transmission procedure. In another example, if there are plural transmission coils, through which the signal strength indicator has been received during the primary sensing signal transmission procedure, the controller 640 may determine a transmission coil, through which a signal strength indicator having a largest value has been received, as a transmission coil, through which the sensing signal will be first transmitted in the secondary sensing signal transmission procedure, and control the multiplexer 621 according to the result of determination.

The communication unit 630 may include at least one of a modulator 631 and a demodulator 632.

The modulator 631 may modulate the control signal generated by the controller 640 and transmit the modulated signal to the multiplexer 621. Here, a modulation method of modulating the control signal may include a frequency shift keying (FSK) modulation method, a Manchester coding modulation method, a phase shift keying (PSK) modulation method, a pulse width modulation method, a differential biphase modulation method, etc., without being limited thereto.

When the signal received through the transmission coil is detected, the demodulator 632 may demodulate the detected signal and transmit the demodulated signal to the controller 640. Here, the demodulated signal may include a signal strength indicator, an error correction (EC) indicator for power control during wireless power transmission, an end of charge (EOC) indicator, an overvoltage/overcurrent/overheating indicator, etc. However, the embodiment is not limited thereto and various types of status information for identifying the status of the wireless power receiver may be included.

In addition, the demodulator 632 may identify through which transmission coil the demodulated signal has been received and provide a predetermined transmission coil identifier corresponding to the identified transmission coil to the controller 640.

In addition, the demodulator 632 may demodulate the signal received through the transmission coil 623 and transmit the demodulated signal to the controller 640. For example, the demodulated signal may include a signal strength indicator. However, the embodiment is not limited thereto and the demodulated signal may include various types of status information of the wireless power receiver.

For example, the wireless power transmitter 600 may acquire the signal strength indicator through in-band communication for performing communication with the wireless power receiver using the same frequency used for wireless power transfer.

In addition, the wireless power transmitter 600 may transmit wireless power using the transmission coil unit 622 and exchange various types of control signals and status information with the wireless power receiver through the transmission coil unit 622. In another example, it should be noted that the wireless power transmitter 600 may further include separate coils corresponding to the first to n-th transmission coils of the transmission coil unit 622, and in-band communication with the wireless power receiver may be performed using the separate coils.

Although the wireless power transmitter 600 and the wireless power receiver perform in-band communication in the description of FIG. 6, this is merely an embodiment and short-range bidirectional communication may be performed through a frequency band different from a frequency band used for wireless power signal transmission. For example, the short-range bidirectional communication may be any one of low-power Bluetooth communication, RFID communication, UWB communication and ZigBee communication.

In addition, although the power transfer unit 620 of the wireless power transmitter 600 includes the multiplexer 621 and the plurality of transmission coils 622 in the description of FIG. 6, this is merely an embodiment and it should be noted that the power transfer unit 620 according to another embodiment may include one transmission coil.

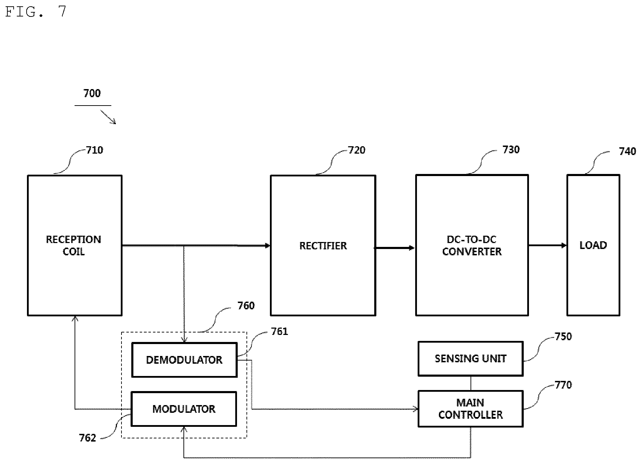

FIG. 7 is a block diagram illustrating the structure of a wireless power receiver interworking with the wireless power transmitter shown in FIG. 6.

Referring to FIG. 7, the wireless power receiver 700 may include a reception coil 710, a rectifier 720, a DC-to-DC converter 730, a load 740, a sensing unit 750, a communication unit 760, and a main controller 770. The communication unit 760 may include a demodulator 761 and a modulator 762.

Although the wireless power receiver 700 shown in the example of FIG. 7 is shown as exchanging information with the wireless power transmitter 600 through in-band communication, this is merely an embodiment and the communication unit 760 according to another embodiment may provide short-range bidirectional communication through a frequency band different from a frequency band used to transmit a wireless power signal.

AC power received through the reception coil 710 may be transmitted to the rectifier 720. The rectifier 720 may convert the AC power into DC power and transmit the DC power to the DC-to-DC converter 730. The DC-to-DC converter 730 may convert the strength of the DC power output from the rectifier into a specific strength required by the load 740 and transmit the converted power to the load 740.

The sensing unit 750 may measure the strength of the DC power output from the rectifier 720 and provide the strength to the main controller 770. In addition, the sensing unit 750 may measure the strength of current applied to the reception coil 710 according to wireless power reception and transmit the measured result to the main controller 770. In addition, the sensing unit 750 may measure the internal temperature of the wireless power receiver 700 and provide the measured temperature value to the main controller 770.

For example, the main controller 770 may compare the strength of the DC power output from the rectifier with a predetermined reference value and determine whether overvoltage occurs. Upon determining that overvoltage occurs, a predetermined packet indicating that overvoltage has occurred may be generated and transmitted to the modulator 762. The signal modulated by the modulator 762 may be transmitted to the wireless power transmitter 600 through the reception coil 710 or a separate coil (not shown). If the strength of the DC power output from the rectifier is equal to or greater than the predetermined reference value, the main controller 770 may determine that a sensing signal is received and perform control to transmit a signal strength indicator corresponding to the sensing signal to the wireless power transmitter 600 through the modulator 762 upon receiving the sensing signal. In another example, the demodulator 761 may demodulate the AC power signal between the reception coil 710 and the rectifier 720 or the DC power signal output from the rectifier 720, identify whether a sensing signal is received, and provide the identified result to the main controller 770. At this time, the main controller 770 may perform control to transmit the signal strength indicator corresponding to the sensing signal through the modulator 762.

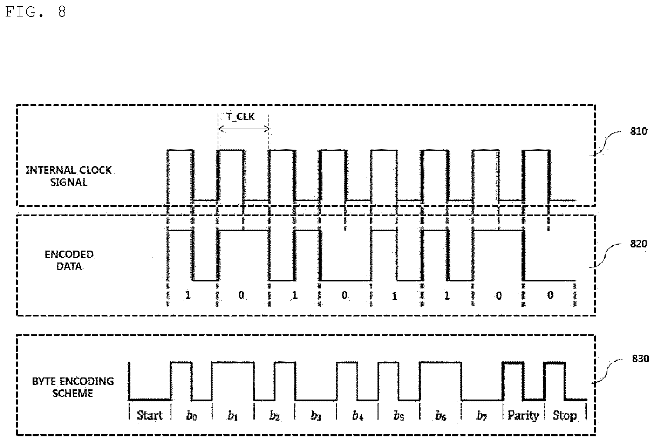

FIG. 8 is a diagram illustrating a method of modulating and demodulating a wireless power signal according to an embodiment.

As denoted by reference numeral 810 of FIG. 8, the wireless power transmission end 10 and the wireless power reception end 20 may encode or decode a packet to be transmitted based on internal clock signals having the same period.

Hereinafter, the method of encoding the packet to be transmitted will be described in detail with reference to FIGs. 1 to 7.

Referring to FIG. 1, when the wireless power transmission end 10 or the wireless power reception end 20 does not transmit a specific packet, the wireless power signal may be an unmodulated AC signal having a specific frequency as denoted by reference numeral 41 of FIG. 1. In contrast, when the wireless power transmission end 10 or the wireless power reception end 20 transmits a specific packet, the wireless power signal may be an AC signal modulated using a specific modulation method as denoted by reference numeral 42 of FIG. 1. For example, the modulation method may include an amplitude modulation method, a frequency modulation method and a frequency and amplitude modulation method, a phase modulation method, etc., without being limited thereto.

The binary data of the packet generated by the wireless power transmission end 10 or the wireless power reception end 20 may be subjected to differential biphase encoding as denoted by reference numeral 820. Specifically, differential biphase encoding have two status transitions to encode data bit 1 and have one state transition to encode data bit 0. That is, data bit 1 is encoded such that transition between a HI state and a LO state occurs in the rising edge and the falling edge of the clock signal and data bit 0 is encoded such that transition between the HI state and the LO state occurs in the rising edge of the clock signal.

The encoded binary data may be subjected to a byte encoding scheme denoted by reference numeral 830. Referring to reference numeral 830, the byte encoding scheme according to the embodiment may refer to a method of inserting, into an encoded 8-bit binary bit stream, a start bit and a stop bit for identifying start and stop of the bit stream and a parity bit for sensing error of the bit stream (byte).

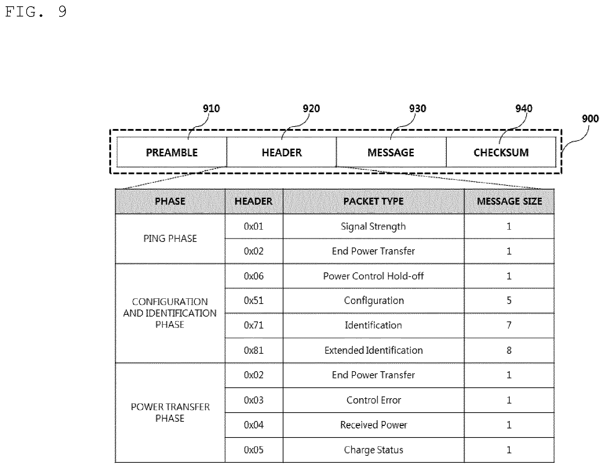

FIG. 9 is a view illustrating a packet format according to an embodiment.

Referring to FIG. 9, the packet format 900 used for information exchange between the wireless power transfer end 10 and the wireless power reception end 20 may include a preamble 910 field for acquiring synchronization for demodulation of the corresponding packet and identifying an accurate start bit of the corresponding packet, a header 920 field for identifying the type of a message included in the corresponding packet, a message 930 field for transmitting the content (or payload) of the corresponding packet, and a checksum 940 field for identifying whether an error has occurred in the corresponding packet.

As shown in FIG. 9, a packet reception end may identify the size of the message 930 included in the corresponding packet based on the value of the header 920.

In addition, the header 920 may be defined for each phase of the wireless power transfer procedure, and the value of the header 920 may be defined as the same value in different phases. For example, referring to FIG. 9, it should be noted that the header value corresponding to end power transfer of the ping phase and end power transfer of the power transfer phase is 0x02.

The message 930 includes data to be transmitted by the transmission end of the corresponding packet. For example, the data included in the message 930 field may be a report, a request, or a response, without being limited thereto.

The packet 900 according to another embodiment may further include at least one of transmission end identification information for identifying the transmission end for transmitting the corresponding packet and reception end identification information for identifying the reception end for receiving the corresponding packet. The transmission end identification information and the reception end identification may include IP address information, MAC address information, product identification information, etc. However, the embodiment is not limited thereto and information for distinguishing the reception end and the transmission end in the wireless charging system may be included.

The packet 900 according to another embodiment may further include predetermined group identification information for identifying a reception group if the corresponding packet is received by a plurality of apparatuses.

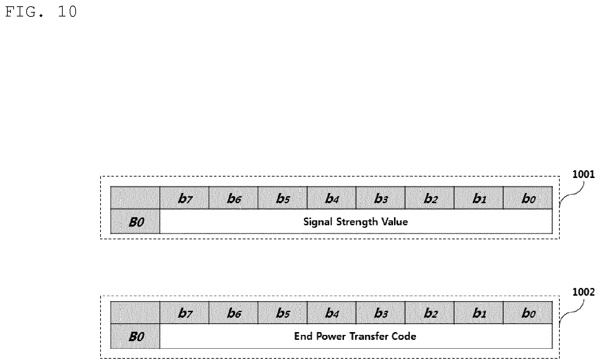

FIG. 10 is a diagram illustrating types of packets transmittable by a wireless power reception apparatus according to the embodiment in a ping phase.

As shown in FIG. 10, in the ping phase, the wireless power reception apparatus may transmit a signal strength packet or an end power transfer packet.

Referring to reference numeral 1001 of FIG. 10, the message format of a signal strength packet according to an embodiment may include a signal strength value having a size of 1 byte. The signal strength value may indicate a degree of coupling between a transmission coil and a reception coil, and may be calculated based on a rectifier output voltage in a digital ping period, an open circuit voltage measured in an output cutoff switch, a received power strength, etc. The signal strength value is in a range of 0 to 255 and may have a value of 255 when an actually measured value U of a specific variable is equal to a maximum value Umax of the variable. For example, the signal strength value may be calculated by U/Umax*256.

Referring to reference numeral 1002 of FIG. 10, the message format of the end power transfer packet according to the embodiment may include an End Power Transfer Code having a size of 1 byte.

Why the wireless power reception apparatus requests power transfer end from the wireless power transmitter may include Charge Complete, Internal Fault, Over Temperature, Over Voltage, Over Current, Battery Failure, Reconfigure, No Response, etc., without being limited thereto. It should be noted that the End Power Transfer Code may be additionally defined in correspondence with a new power transfer end reason.

Charge Complete may be used when charging of the receiver battery has been completed. Internal Fault may be used when software or logical fault in internal operation of the receiver is sensed.

Over Temperature/Over Voltage/Over Current may be used when the temperature/voltage/current value measured in the receiver exceeds each defined threshold value.

Battery Failure may be used when a problem occurs in the receiver battery.

Reconfigure may be used if renegotiation of a power transfer condition is necessary. No Response may be used upon determining that the response of a transmitter to a control fault packet, which means that the power strength increases or decreases, is not normal.

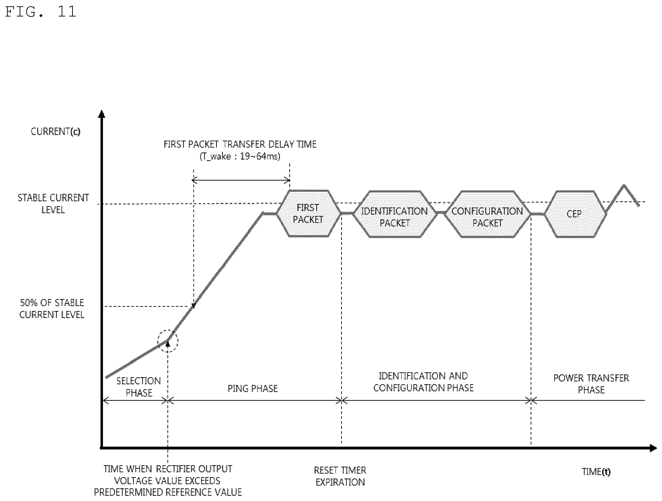

FIG. 11 is a diagram illustrating a procedure of transmitting a first packet in a wireless power reception apparatus according to an embodiment.

Referring to FIG. 11, the wireless power reception apparatus may immediately transition to a ping phase, when a rectifier output voltage is equal to or greater than a predetermined reference value in a selection phase. When the current level of a reception coil exceeds a predetermined reference value in the ping phase, a first packet should be transmitted within a time capable of being maximally delayed for transmission of a predefined first packet (hereinafter referred to as a first packet transfer delay time). For example, the reference value for transitioning from the selection phase to the ping phase may be defined as 50% of a stable current level value predefined in a reception end. Here, the first packet transfer delay time may have a range of 19 to 64 ms, without being limited thereto. In addition, the wireless power reception apparatus may determine the first packet transfer delay time and transmit the determined first packet transfer delay time to the wireless power transmission apparatus through a configuration packet.

For example, the wireless power transmission apparatus may end power signal transfer within a predetermined termination time T_terminate when a first packet is not received with a predetermined ping time window T_ping_time_window after the current value of the transmission end exceeds 50% of the stable current level. Here, ending of power signal transfer may mean ending of digital ping signal transmission without being limited thereto and may mean that the wireless power transmission apparatus ends digital ping transmission, returns to the selection phase and transmits an analog ping.

In addition, upon deciding not to enter the identification and configuration phase after receiving a signal strength packet as a first packet, the wireless power transmission apparatus may end power signal transfer within a predetermined expiration time T_expire after a reception start time point of the signal strength packet. Here, not entering the identification and configuration phase after receiving the first packet may mean entering the selection phase.

In addition, the wireless power transmission apparatus may end power signal transfer within the expiration time T_expire, after determining that the first packet has not been normally received.

In addition, when a first packet other than the signal strength packet, for example, the End Power Transfer Packet, is normally received, the wireless power transmission apparatus may end power signal transfer within the expiration time T_expire after receiving the packet.

In addition, the wireless power transmission apparatus may determine an offset value applied to a control error packet based on at least one of the power class and maximum power of the wireless power reception apparatus included in a configuration packet. For example, the offset value of a wireless power reception apparatus having a higher power class may be determined to be relatively greater than that of a wireless power reception apparatus having a lower power class. In another example, the offset value may be determined such that the strength of power controlled according to a sum of the control error packet and the offset value does not exceed the maximum power of the receiver.

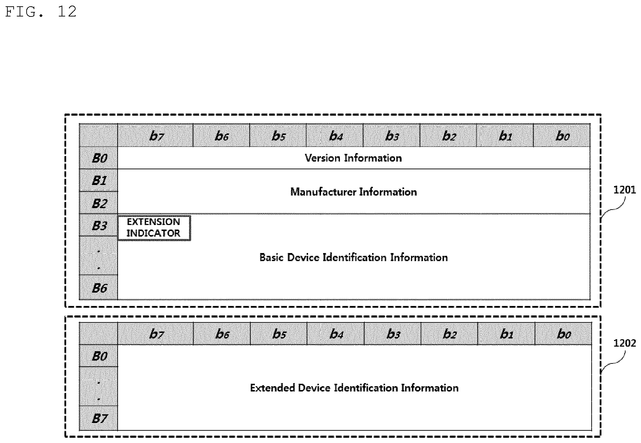

FIG. 12 is a diagram illustrating the message format of an identification packet according to an embodiment.

Referring to FIG. 12, the message format of the identification packet may include a Version Information field, a Manufacturer Information field, an Extension Indicator field and a Basic Device Identification Information field.

In the Version Information field, revision version information of the standard applied to the wireless power reception apparatus may be recorded.

In the Manufacturer Information field, a predetermined identification code for identifying the manufacturer of the wireless power reception apparatus may be recorded.

The Extension Indicator field may be an indicator for identifying whether an extension identification packet including extension device identification information is present. For example, if the extension indicator value is 0, this may mean that the extension identification packet is not present and, if the extension indicator is 1, this may mean that the extension identification packet is present.

Referring to reference numerals 1201 and 1202, if the extension indictor value is 0, the device identifier for the wireless power receiver may be a combination of the manufacturer information and basic device identification information. In contrast, if the extension indictor value is 1, the device identifier for the wireless power receiver may be a combination of the manufacturer information, basic device identification information and extended device identification information.

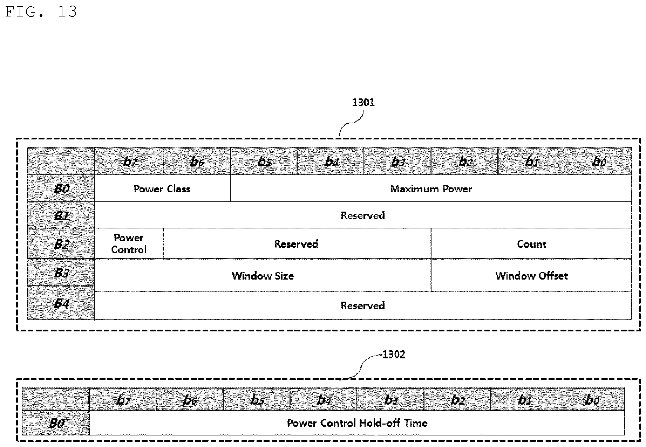

FIG. 13 is a diagram illustrating the message format of a configuration packet and a power control hold-off time packet according to the embodiment.

As denoted by reference numeral 1301 of FIG. 13, the message format of the configuration packet may have a length of 5 bytes and include a Power Class field, a Maximum Power field, a Power Control field, a Count field, a Window Size field, a Window Offset field, etc.

In the Power Class field, a power class allocated to the wireless power receiver may be recorded.

In the Maximum Power field, the strength value of the maximum power capable of being provided by the rectifier output terminal of the wireless power receiver may be recorded.

For example, if the power class is a and the maximum power is b, a maximum power amount Pmax desired to be provided by the rectifier output terminal of the wireless power reception apparatus may be (b/2)*10^{a}.

The Power Control field may be used to indicate according to which algorithm power control is performed in the wireless power transmitter. For example, if the Power Control field value is 0, this may mean that a power control algorithm defined in the standard is applied and, if the Power Control field value is 1, this may mean that power control is performed according to an algorithm defined by a manufacturer.

The Count field may be used to record the number of option configuration packets to be transmitted in the identification and configuration phase.

The Window Size field may be used to record a window size for calculating average received power. For example, the window size may be a positive integer greater than 0 and in units of 4 ms.

In the Window Offset field, information for identifying a time from an average received power calculation window end time to a next received power packet transmission start time may be recorded. For example, the window offset may be a positive integer greater than 0 and in units of 4 ms.

Referring to reference numeral 1302, the message format of the power control hold-off packet may include a power control hold-off time T_delay. A plurality of power control hold-off packets may be transmitted during the identification and configuration phase. For example, up to seven power control hold-off packets may be transmitted. The power control hold-off time T_delay may have a value between a predefined power control hold-off minimum time T_min (5ms) and a power control hold-off maximum time T_max (205ms). The wireless power transmission apparatus may perform power control using the power control hold-off time of the power control hold-off packet lastly received in the identification and configuration phase. In addition, when the power control hold-off packet is not received in the identification and configuration phase, the wireless power transmission apparatus may use the T_min value as the T_delay value.

The power control hold-off time may mean a time when the wireless power transmission apparatus waits until actual power control is performed after a latest control error packet is received.

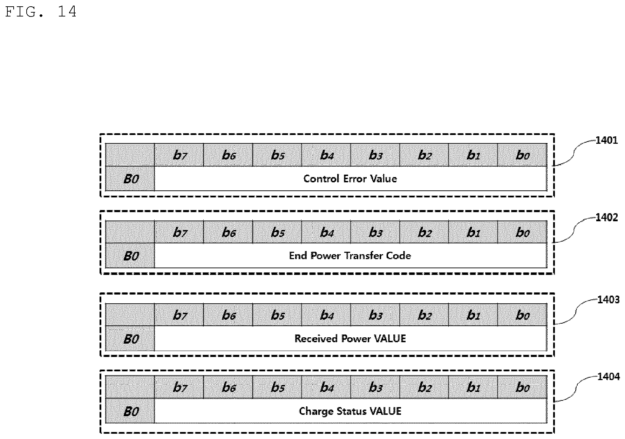

FIG. 14 is a diagram illustrating the types of packets transmittable by a wireless power reception apparatus according to an embodiment in a power transfer phase and the message formats thereof.

Referring to FIG. 14, in the power transfer phase, a packet transferrable by the wireless power reception apparatus may include a Control Error Packet, an End Power Transfer Packet, a Received Power Packet, a Charge Status Packet, a packet defined by each manufacturer, etc.

Reference numeral 1401 shows the message format of the control error packet composed of a control error value of 1 byte. Here, the control error value may be an integer ranging from -128 to +127. The power transmitted by the wireless power transmission apparatus may decrease if the control error value is negative and increase if the control error value is positive.

Reference numeral 1402 shows the message format of a control error packet composed of an End Power Transfer Code of 1 byte. For the End Power Transfer Code, refer to the description of FIG. 10.

Reference numeral 1403 shows the message format of the received power packet composed of a received power value of 1 byte. Here, the received power value may correspond to an average rectifier received power value calculated during a predetermined period. An actually received power amount P_{received} may be calculated based on the maximum power and the power class included in the configuration packet 1501. For example, the actually received power amount may be calculated by (the received power value/128) * (the maximum power/2) * (10^{power class}).

Reference numeral 1404 shows the message format of the charge status packet composed of a charge status value of 1 byte. The charge status value may indicate the battery charging amount of the wireless power reception apparatus. For example, a charge status value 0 may mean a completely discharged state, a charge status value 50 may mean a charge state of 50% and a charge status value 100 may mean a fully charged state. When the wireless power reception apparatus does not include a charge battery or may not provide charge status information, the charge status value may be set to 0xFF.

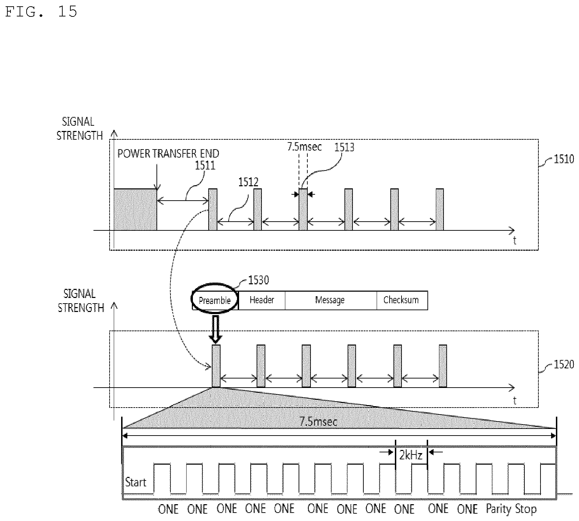

FIG. 15 is a diagram illustrating a response signal corresponding to a ping signal transmitted from a wireless power transmitter according to an embodiment.

FIG. 15 includes a diagram 1510 showing a timing when a wireless power transmitter transmits a power signal and a ping signal to a wireless power receiver and a diagram 1520 showing a timing when the wireless power transmitter receives a response signal to the ping signal from the wireless power receiver.

The wireless power transmitter and the wireless power receiver may transmit and receive a control signal through in-band communication, and the wireless power transmitter for performing in-band communication may monitor the response signal while the ping signal is transmitted.

Specifically, when the wireless power transmitter transmits the ping signal to the wireless power receiver, the wireless power receiver may perform encoding such that the received ping signal has a HI state or a LO state, and transmit the response signal including the signal strength indicator to the wireless power transmitter.

The wireless power transmitter may receive the response signal 1520 from the wireless power receiver during the transmission time of the ping signal due to the characteristics of in-band communication. For example, when the wireless power transmitter transmits the ping signal for 7.5 msec, the response signal to the ping signal may be received for 7.5 msec.

Meanwhile, the wireless power transmitter may receive the response signal to the ping signal and identify whether the receiver is an existing wireless power receiver which was located in the charging area using information included in the response signal.

In particular, even when charging of the wireless power transmitter ends, the wireless power transmitter may confirm location change of the wireless power receiver. In a state in which charging ends, the wireless power transmitter may identify whether the receiver is a wireless power receiver which was located in the charging area before power transfer ends using a preamble 1530 included in the packet format 900 of FIG. 9.

The preamble 1530 is data having a size of 11 to 25 bits, which allows the wireless power transmitter to sense the start of a header and to perform synchronization with the response signal. For example, the preamble 1530 may be composed of 11 bits in a consecutive HI state.

Referring to 1510, the wireless power transmitter may determine a power transfer end condition and end power signal transfer to the wireless power receiver, thereby ending power transfer.

In particular, if the power end condition is satisfied in the power transfer phase, the wireless power transmitter may transition to the selection phase and end power transfer to the wireless power receiver.

In the power transfer phase, when an unexpected packet is received, when an expected packet is not received during a predefined time (timeout), when a predetermined power transfer contract is violated (power transfer contract violation), or when charging is terminated, the wireless power transmitter may end power transfer and transition to the selection phase.

Specifically, the power transfer end condition may be satisfied when the wireless power transmitter does not receive the status information of the wireless power receiver, which should be received within a predetermined time at a predetermined period. The status information received from the wireless power receiver at the predetermined period may be at least one of a Control Error Packet, a Received Power Packet, and a Charge Status Packet.

Alternatively, the power transfer end condition may be satisfied when the End Power Transfer Packet is received from the wireless power receiver. The End Power Transfer Signal may include Charge Complete, Internal Fault, Over Temperature, Over Voltage, Over Current, Battery Failure, Reconfigure, No Response, etc., without being limited thereto.

If the power transfer end condition is satisfied, the wireless power transmitter may end power transfer during a predetermined time 1511. Thereafter, the wireless power transmitter may transmit a ping signal at a predetermined period 1512 in order to confirm whether the location of the wireless power receiver previously located in the charging area has been changed.

The wireless power transmitter may transmit the ping signal in order to determine whether the wireless power receiver is located in the charging area. At this time, the wireless power transmitter may change the transmission time 1513 of the ping signal.

In one embodiment, the wireless power transmitter may transmit the ping signal for 7.5 msec and receive the response signal thereto during a ping signal transmission time according to the characteristics of in-band communication.

The response signal from the wireless power receiver may be configured in the packet format shown in FIG. 9 encoded by the wireless power receiver, and the wireless power transmitter may confirm whether the location of the wireless power receiver has been changed through information of the preamble 1530 of the response signal.

At this time, if the wireless power receiver is continuously located in the charging area, heat may be generated by the ping signal. In addition, the wireless power transmitter continuously transmitting the ping signal may cause power waste.

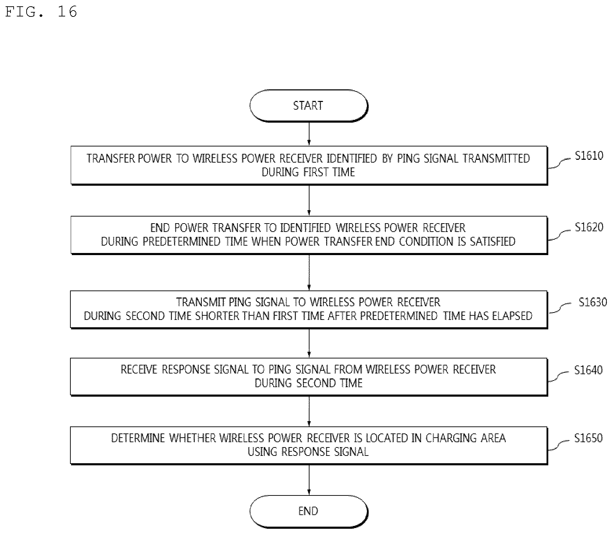

FIG. 16 is a flowchart illustrating a method of confirming location change of a wireless power receiver according to an embodiment.

Referring to FIG. 16, the wireless power transmitter may transfer power to the wireless power receiver identified by the ping signal transmitted during a first time (S1610). The wireless power transmitter may transmit the ping signal during the first time in order to detect and identify the wireless power receiver in the ping phase. Thereafter, the wireless power transmitter may transfer a power signal to the wireless power receiver detected and identified by the ping signal, thereby performing wireless power transfer.

The ping signal may have a power amount capable of driving the communication unit of the wireless power receiver. For example, the wireless power receiver may drive the communication unit by the ping signal, thereby performing communication with the wireless power transmitter.

The first time may be sufficient to transfer power capable of driving the communication unit of the wireless power receiver by the ping signal. For example, the first time may be 7.5 msec.

The wireless power transmitter may end power transfer to the identified wireless power receiver during a predetermined time when the power transfer end condition is satisfied (S1620).

In the power transfer phase, the wireless power transmitter may determine the power transfer end condition. The power transfer end condition may be satisfied when an error occurs in the wireless power transmitter or the wireless power receiver.

For example, when the status information (e.g., the Control Error Packet, the Received Power Packet and the Charge Status Packet) periodically received from the wireless power receiver within the predetermined time is not received within the predetermined time, the power transfer end condition may be satisfied.

Alternatively, when the End Power Transfer Packet including at least one of Charge Complete, Internal Fault, Over Temperature, Over Voltage, Over Current, Battery Failure, Reconfigure and No Response is not received from the wireless power receiver, the power transfer end condition may be satisfied.

The wireless power transmitter may transmit the ping signal to the wireless power signal during a second time shorter than the first time when a predetermined time has elapsed after power transfer ends (S1630).

The wireless power transmitter may control the transmission time of the ping signal to transmit the ping signal having a different transmission time or power level.

In a state in which power transfer ends in the power transfer phase, the wireless power transmitter may confirm the location of the wireless power receiver using the ping signal having low power, instead of transmitting high power capable of driving the communication unit of the wireless power transmitter to confirm the location of the wireless power receiver.

Specifically, when an object is detected in the ping phase, the wireless power transmitter wakes up the wireless power receiver through the ping signal including predetermined electric energy and transmits a digital ping signal for identifying whether the wireless power receiver is compatible with the WPC standard. The digital ping signal may have a higher power level than an analog ping signal for detecting whether an object is present in the charging area in the selection phase.

Thereafter, in the power transfer phase, the wireless power transmitter may use a ping signal having lower power in order to confirm whether the wireless power receiver is continuously located in the charging area even after ending power transfer.

In addition, the ping signal transmitted to confirm whether the existing wireless power receiver is present in a state of ending power transfer and to identify the wireless power receiver may generate heat in the wireless power receiver and increase power consumption in the wireless power transmitter.

Therefore, in the embodiment, the wireless power transmitter may transmit a ping signal having a shorter transmission time than the ping signal transmitted to identify the wireless power receiver in the ping phase, and confirm whether the location of the wireless power receiver has been changed using only the response signal received during the shorter transmission time.

At this time, the power level of the ping signal generated by the wireless power transmitter may be equal to that of the ping signal transmitted to identify the wireless power receiver in the ping phase. However, by decreasing the transmission time, it is possible to decrease the amount of power consumed by the wireless power transmitter and to decrease the amount of heat generated in the wireless power receiver.

The wireless power transmitter may receive the response signal to the ping signal from the wireless power receiver during a second time (S1640).

Since the wireless power receiver is previously charged in the power transfer phase, the second time may be a time when power for enabling the wireless power receiver, which has received the ping signal, to generate a response signal may be transferred.

The wireless power transmitter may receive the response signal to the ping signal during a time (the second time) when the ping signal is transmitted through in-band communication. The response signal is a feedback signal for the ping signal generated in the wireless power transmitter, and the transmission time of the ping signal and the reception time of the response signal to the ping signal may be substantially equal.

When the response signal is not received, the wireless power transmitter may determine that the wireless power receiver is not located in the charging area and end power transfer.

The wireless power transmitter may determine whether the wireless power receiver is located in the charging area using the response signal (S1650).

If the response signal received during the second time has a predetermined number of consecutive bits in a predefined HI state, the wireless power transmitter may determine that the receiver is a wireless power receiver previously located in the charging area.

The wireless power transmitter may determine whether the wireless power receiver is located in the charging area using some information of the response signal. Even upon determining that the wireless power receiver is located in the charging area, if the wireless power receiver is in the charge complete status, the wireless power transmitter may end power transfer.

Specifically, the wireless power transmitter may determine whether the wireless power receiver is located in the charging area using information received during a specific time from a point in time when the response signal has been received. In addition, the wireless power transmitter may determine whether the wireless power receiver is located in the charging area using information contained in a predetermined number of consecutive bits from the start bit of the response signal.

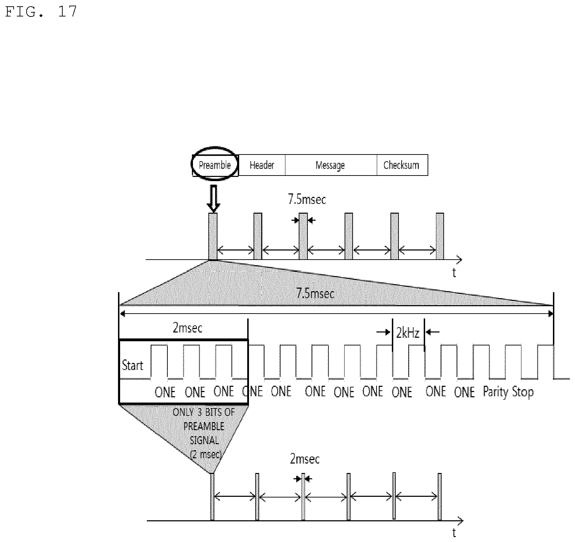

FIG. 17 is a diagram illustrating reception timings of response signals corresponding to ping signals having different transmission times according to an embodiment.

Referring to FIG. 17, the wireless power transmitter may perform transmission by changing the transmission time of the ping signal.

When the wireless power transmitter transmits the ping signal during the first time (e.g., 7.5 msec), the wireless power transmitter may receive the response signal to the ping signal during the first time (7.5 msec), and, when the wireless power transmitter transmits the ping signal during the second time (e.g., 2 msec) shorter than the first time, the wireless power transmitter may receive the response signal to the ping signal during the second time.

When the time when the wireless power transmitter transmits the ping signal is short, a time when the response signal to the ping signal is received may also be short. In addition, when the time when the ping signal is transmitted is short, total power consumed in the wireless power transmitter may also decrease and the amount of heat generated in the wireless power receiver may decrease.

For example, if the wireless power receiver sets the period of the response signal to the ping signal to 2 kHz, the time of 1 bit of the response signal becomes 0.5 msec. At this time, when the wireless power transmitter transmits the ping signal for 7.5 msec, the wireless power transmitter may receive 11-bit preamble information. When the wireless power transmitter transmits the ping signal for 2 msec, the wireless power transmitter may receive 3-bit preamble information.

Upon determining that the 3-bit preamble information is encoded information in the consecutive HI state, the wireless power transmitter may determine that the receiver is an existing wireless power receiver located in the charging area.

The wireless power transmitter may determine whether the location of the wireless power receiver has been changed using some information (consecutive 2 bits) of the received 3-bit preamble information.

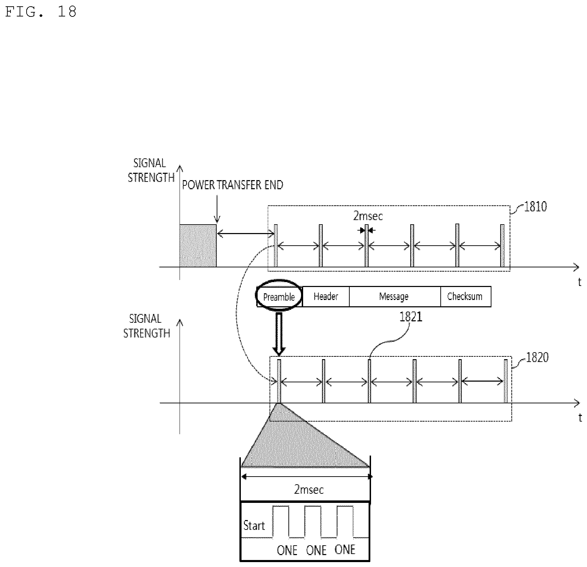

FIG. 18 is a diagram illustrating reception timings of response signals corresponding to ping signals having different transmission times according to another embodiment.

Referring to FIG. 18, the wireless power transmitter may transmit, to the wireless power receiver, the ping signal having a shorter transmission time (e.g., 2 msec) than the ping signal transmitted to identify the wireless power receiver in the ping phase, after ending wireless power transfer. The wireless power transmitter may confirm location change of the wireless power receiver by the response signal 1820 corresponding to the ping signal having a short transmission time from the wireless power receiver.

The wireless power transmitter may more rapidly determine whether the receiver is an existing wireless power receiver located in the charging area before ending power transfer using the ping signal having the short transmission time and the short response signal, and decrease the amount of power consumed by the ping signal.

Although the power control method of the embodiment is applied to the wireless power transmitter according to the WPC standard in the present specification, the present disclosure is not limited thereto and the same technical ideal is applicable to wireless power transmitters according to other standards such as the PMA standard or the A4WP standard through information equal or similar to the information used in the above-described power control method.

The method according to the foregoing embodiments may be implemented as code that can be written to a computer-readable recording medium and can thus be read by a computer. Examples of the computer-readable recording medium include a ROM, a RAM, a CD-ROM, a magnetic tape, a floppy disk, an optical data storage, and a carrier wave (e.g., data transmission over the Internet).

The computer-readable recording medium can be distributed over a plurality of computer systems connected to a network so that computer-readable code is written thereto and executed therefrom in a decentralized manner. Functional programs, code, and code segments needed to realize the embodiments herein can be construed by one of ordinary skill in the art.

Those skilled in the art will appreciate that the disclosure may be carried out in other specific ways than those set forth herein without departing from the spirit and essential characteristics of the disclosure.

The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### [Industrial Applicability]

A method of controlling a wireless power transmitter according to an embodiment may be used in a wireless power transmitter for confirming the location of a wireless power receiver when power transfer ends, in at least one of an electromagnetic induction method, an electromagnetic resonance method and an RF wireless power transmission method.

## Claims

1. A method of controlling a wireless power transmitter, the method comprising:
transferring power to a wireless power receiver identified by a ping signal transmitted during a first time;
ending power transfer to the identified wireless power receiver during a predetermined time when a power transfer end condition is satisfied;
transmitting a ping signal to the wireless power receiver during a second time shorter than the first time after the predetermined time has elapsed;
receiving a response signal to the ping signal from the wireless power receiver during the second time; and
determining whether the wireless power receiver is located in a charging area using the response signal.

2. The method according to claim 1, wherein the determining of whether the wireless power receiver is located in the charging area using the response signal includes determining whether the wireless power receiver is located in the charging area using some information of the response signal.

3. The method according to claim 1, wherein the power transfer end condition is satisfied when a status signal is not received from the wireless power receiver within a third time or when a status error signal is received from the wireless power receiver.

4. The method according to claim 2, wherein the determining of whether the wireless power receiver is located in the charging area using some information of the response signal includes determining whether the wireless power receiver is located in the charging area using information received during a fourth time from a point in time when the response signal has been received.

5. The method according to claim 2, wherein the determining of whether the wireless power receiver is located in the charging area using some information of the response signal includes determining whether the wireless power receiver is located in the charging area using information contained in a predetermined number of consecutive bits from a start bit of the response signal.

6. The method according to claim 2, wherein the determining of whether the wireless power receiver is located in the charging area using some information of the response signal includes determining that the wireless power receiver is located in the charging area when the some information is equal to predetermined information.

7. The method according to claim 3, wherein the status error signal is received from the wireless power receiver while transmitting a power signal to the wireless power receiver.

8. The method according to claim 3, wherein the status error signal includes at least one of Charge Complete, Internal Fault, Over Temperature, Over Voltage, Over Current, Battery Failure, Reconfigure and No Response.

9. The method according to claim 1, further comprising determining that the wireless power receiver is not located in the charging area and ending power transfer, when the response signal is not received.

10. The method according to claim 1, further comprising ending power transfer when the wireless power receiver is located in the charging area.
